# EUROPÄISCHE PATENTSCHRIFT

(11) **EP 0 764 303 B1**
(45) Veröffentlichungstag und Bekanntmachung des Hinweises auf die Patenterteilung: **01.07.1998**
(21) Anmeldenummer: 95920764.8
(22) Anmeldetag: 30.05.1995
(51) Int. Cl.: G06F 12/14

(54) **MICROCONTROLLERSICHERUNGSVERFAHREN**
METHOD OF ENSURING THE SECURITY OF MICROCONTROLLERS
PROCEDE DE PROTECTION DE MICROCONTROLEURS

(30) Priorität: 04.06.1994 DE 4419635
(43) Veröffentlichungstag der Anmeldung: 26.03.1997
(73) Patentinhaber: ESD VERMÖGENSVERWALTUNGSGESELLSCHAFT MBH, 80333 München (DE)
(72) Erfinder: BUGOCICS, Jozsef, D-06886 Lutherstadt Wittenberg (DE)
(74) Vertreter: Haussingen, Peter
(86) Internationale Anmeldenummer: DE9500740
(87) Internationale Veröffentlichungsnummer: WO9534033

(56) Entgegenhaltungen:
- EP-A- 0 537 738
- EP-A- 0 555 715
- WO-A-85/02310
- US-A- 4 914 697

## Beschreibung

Die Erfindung betrifft ein Verfahren zum Sichern von Microcontrollerprogrammen mit externen Speichern vor Auslesbarkeit und das Sichern von Microcontrollerbaugruppen vor Duplizierbarkeit.

In vielen Anwendungsfällen wird häufig eine Vielzahl von Mikrocontrollern benötigt, wobei jeder Microcontroller möglichst einzigartig sein soll und der Inhalt des Microcontrollers nicht für Außenstehende zugänglich sein darf. Ein Anwendungsbereich ist beispielsweise im Identifikations- und Verschlüsselungsbereich zu sehen, wo spezielle interne Schlüssel benötigt werden, aber eine Serienproduktion von geschlossenen Schaltkreisen in EEPROM-Technologie aus Kostengründen nicht möglich ist. Oft muß die Knowhow tragende Firma ihre Produktion außer Haus geben, in einem solchen Fall kommt es zu einer notwendigen Informationsübergabe an den Produktionsbetrieb, so daß dieser in der Lage ist, mehr oder sehr ähnliche Bauelemente auf eigene Kosten herzustellen und selbst zu vermarkten, ohne daß der Auftraggeber davon etwas weiß.

Im bisherigen Stand der Technik ist ein Verfahren und eine Schaltungsanordnung zur Lösung einer ähnlichen Aufgabe nach der Patentschrift EP 0 114 522 bekannt. Das Ziel dieses Verfahrens besteht lediglich darin, daß nach der Fertigstellung des ROM-Bausteins, die Kopie dieses Bausteins erschwert wird, indem nicht nur ein einfacher ROM an die Microcontrollerbaugruppe angeschlossen wird, sondern ein Modul, bestehend aus einem ROM, einer Ver- und Entschlüsselungseinheit und einem Schlüsselspeicher. Die vom Microcontroller benötigten Informationen gelangen so verschlüsselt zum Microcontroller, der wiederum eine Ver- und Entschlüsselungseinheit und ein Schlüsselfeld benötigt, um dann die so gewonnenen Informationen in umsetzbaren Code oder Klartext zu verarbeiten. Dabei wird in der Initialisierungsphase von der Microcontrollereinheit ein Schlüssel an den ROM gesandt, mit dem dann die Informationen im weiteren verschlüsselt übertragen werden. Damit soll sichergestellt werden, daß kein Nutzer die Information im Klartext lesen kann.

Der Nachteil dieses Verfahrens besteht darin, daß lediglich vor der Kopie des Inhaltes des ROM's durch nichtprofessionelle Anwender geschützt wird. Die Kosten für eine solche Lösung sind auch erheblich größer gegenüber der Benutzung eines standardmäßigen ROM'S, es muß die Ver- und Entschlüsselungseinheit sowohl im ROM-Modul als auch im Microcontrollermodul implementiert werden. Einen Angriffspunkt stellt auch das Abhorchen des zugesandten Schlüssels dar. In Kenntnis der Ver- und Entschlüsselungstechnik, die aus Kostengründen nicht sehr aufwendig sein darf, ist eine Dublizierung des ROM'S auch für nichtprofessionelle Anwender möglich. Die Art des Verschlüsselungsalgorithmus kann ebenfalls nur durch die Änderung des gesamten Microcontrollersystems erreicht werden. Es können immer nur Module verwandt werden, die diesem im Microcontrollermodul befindlichen Verschlüsselungsystem entsprechen, so daß die zugesandten Paßwörter auch diesen einen bestimmten verschlüsselten Text erzeugen.

Für professionelle Anwender, die einen solchen ROM als Raubkopie herstellen möchten, das kann auch der Produzent des Moduls sein, ist eine Kopie der Einheit problemlos möglich. Es wird einfach der gesamte ROM und die Schaltkreisstruktur kopiert.

Weiterhin ist ein Verfahren nach der Patentschrift EP 0449256A2 bekannt, in welchem Programme 5 und Daten verschlüsselt in einem Speicher abgelegt werden und bei Bedarf durch einen im zweiten Speicher 7 abgelegten Schlüssel mit Hilfe einer Ver- und Entschlüsselungeinrichtung wieder decodiert werden. Die Entschlüsselungseinheit befindet sich zwischen der CPU und dem Datenbus und der CPU. Die Entschlüsselungseinheit besteht aus AND und OR Gattern, die bei einem Zugriff auf den Daten- und Programmspeicher mit Hilfe des Schlüssels aus dem Schlüsselspeicher die notwendigen Daten in Echtzeit entschlüsseln und der CPU zuführen. Der Entschlüsselungsalgorithmus ist durch die Hardwarestruktur der Entschlüsselungseinheit vorgegeben. Der benötigte Schlüssel für die Programme befindet sich ebenfalls im Speicher 5 und wird beim Start des Systems in den Speicher 7 übertragen.

Der Nachteil des Verfahrens besteht darin, daß ein solcher Microcontroller mit externen Speichern jederzeit beliebig dupliziert werden kann und kein Schutz gegenüber dem Produzenten von solchen Microcontrollerbaugruppen existiert. Zusätzlich zu einem Standardmicrocontroller wird eine Codier- und Decodiereinheit benötigt. Gegenüber dieser Decodiereinheit besteht die Anforderung, die benötigten Befehle mit Hilfe des Schlüssels, der im Speicher 7 abgelegt ist, in Echtzeit zu entschlüsseln. Dies bedeutet, daß der Entschlüsselungsalgorithmus nicht zu kompliziert sein darf, weil sonst die benötigte Zeit zum Entschlüsseln der Befehle zu hoch wird und so die Leistung des Microcontrollers ausgebremst werden könnte. Des weiteren wächst mit der Komplexität des benötigten Entschlüsselungsaufwandes auch die benötigte Chipfläche an. Ein wesentlicher Nachteil besteht ebenfalls darin, daß der Schlüssel für den Programmspeicher 5 innerhalb des Programmspeichers abgelegt wird. Ein Hersteller der Microcontrollerbaugruppe ist somit in die Lage versetzt, das verschlüsselte Programmodul zu entschlüsseln und Zugriff auf das mögliche Know-how des Auftraggebers zu erhalten.

Weitere Schriften beziehen sich lediglich auf die verschieden Methoden zum Schutz von internen ROM-Inhalten vor unberechtigtem Auslesen, wie in der Patentschrift nach EP 468535A2 dargestellt. Hier wird ein Verfahren vorgestellt, indem ein interner ROM 4 und ein Ein- und Ausgabeports 5 und 6 mit einer CPU über einen Bus verbunden ist und der Inhalt des ROM's erst dann über den Ausgabeport ausgegeben wird, nachdem über den Eingabeport Teile oder der ganze Inhalt des internen ROM'S eingegeben wurde. Diese Verfahren sind nur im weitesten Sinne der erfinderischen Lösung zuzuordnen.

Durch die Lösung nach der Druckschrift EP 536943A2 ist eine Datensicherungsanordnung bekannt, bei welcher in einem im Bezug auf eine programmierbare logische Einheit 11, extern angeordneten ROM 4, die Daten nicht nur gesichert gegen ein Raubkopieren sind, sondern auch der exterene ROM Speicher der logischen Einheit unvertauschbar fest zugeordnet ist.

Der Nachteil dieser Lösung besteht darin, daß bei der Produktion der Datensicherungsanordnung keine Sicherheit gegenüber dem Produzenten der Einheit gewährt wird. Damit kann der Produzent der Datensicherungseinheit beliebig viele Kopien mit einer beliebigen Serialisierung des Systems erstellen, ohne daß der Auftraggeber darüber Kenntnis erlagen kann. Die Sicherheit des Systems kann damit auch schon durch Mitarbeiter des Produzenten oder der eigenen Firma untergraben werden.

Des weiteren können keine beliebig großen Programme in variabler Größe in aus dem externen Speicher nachgeladen werden. Der externe Speicher kann nur so groß gewählt werden, wie der intern zur Verfügung stehende SRAM abbilden kann. Damit ist eine Einschränkung der Nutzung, besonders im hochvariablen Microcontrollerbereich von vornherein gegeben.

Mit der Weiterentwicklung der Rechentechnik und der Kryptologie müssen besonders bei sicherheitsrelevanten Systemen, die zum Zahlungsverkehr oder zur Identifikation von Personen genutzt werden sollen, hochwertige Verschlüsselungsalgorithmen eingesetzt werden. Ein Einsatz eines komplexen Verschlüsselungssystems würde in der Lösung nach der Druckschrift EP 536943A2 den Kostenrahmen und die Komplexität des Systems sprengen.

Des weiteren bedarf die Austauschbarkeit des Entschlüsselungsalgorithmus in der Lösung nach der Druckschrift EP 536943A2 einer kostenintensiven Hardwareänderung. Mit der fortschreitenden Entwicklung der Rechentechnik und der Mathematik können besonders Verschlüsselungsalgorithmen, die heute noch als sicher galten, morgen schon durch einfache PC-Programme entschlüsselt werden. Damit muß auch der Algorithmus der Entwicklung der Mathematik (Kryptologie) und der Rechentechnik Schritt halten. Eine Variabilisierung der Algorithmen muß damit eine Voraussetzung für ein längeren Einsatz eines preiswerten Moduls sein.

Die Serialisierung der einzelnen Datensicherheitseinrichtungen nach der Druckschrift EP 536943A2 ist nicht unfälschbar möglich. Da die Seriennummern nur im Klartext oder über das Keyword an die Datensicherheitseinrichtung nach der Druckschrift EP 536943A2 übertragen werden können. Damit kann der Produzent der Einrichtung beliebig viele Datensicherungseinrichtungen mit weiteren Seriennummern produzieren, ohne daß der entsprechende Know-how-Träger davon Kenntnis erhält. Die Sicherheit der Produktion von elektronischen Bauelementen dieser Art ist besonders bedeutungsvoll, da solche Elemente, meist aus Kosten gründen, in Billiglohnländern außerhalb der Knowhow tragenden Firmen produziert werden, aber gleichzeitig solche Systeme im Zahlungsverkehr- und Identifikationsystem eingesetzt werden sollen. Damit ist die Versuchung, weitere Module oder Kopien und Plagiate herzustellen, sehr groß. Viele der Videoverschlüsselungsverfahren z.B. wurden unter anderem geknackt oder kopiert, weil es in der Produktion der einzelnen Einheiten ,,Informationslücken" in den produzierenden Unternehmen gab, die als Quelle für Fälscher und Plagiathersteller dienten.

Um die oben genannten Nachteile des Standes der Technik, zur Verhinderung des unberechtigten Kopierens und Vervielfältigens von Microcontrollermodulen mit externen Speichern und zur Verhinderung der Auslesung und Duplizierung von externen Microcontrollerspeichern sowie zur Befehls- und Informationsergänzung für Microcontroller, insbesondere durch einen beauftragten Hersteller solcher Module, abzustellen, ist es Aufgabe der Erfindung, ein Verfahren zu schaffen, das in Kombination mit einer einfachen Schaltungsanordnung, unter herkömmlichen Bestückungsbedingungen beliebig viele selektiv identifizierbare Microcontrollergruppen herzustellen gestattet, die für nicht autorisierte Personen nicht nachbaubar oder deren Inhalte nicht auslesbar oder duplizierbar sind, und daß der Produzent von solchen Microcontrollereinheiten ebenfalls keine Microcontroller selbst produzieren oder nachbauen kann.

Erfindungsgemäß wird die Aufgabe durch die im Patentanspruch 1 angegebenen Merkmale gelost. Bevorzugte Weiterbildungen der Erfindung ergeben sich aus den Unteransprüchen.

Die Vorteile der Erfindung bestehen darin, daß eine einheitliche Microcontrollerbaugruppe (Modul) standardmäßig hergestellt werden kann und daß beliebige Programme in variabler Größe aus dem externen Speicher nachgeladen werden können, wobei das externe Programm weder für den Produzenten der Baugruppe noch für Dritte auslesbar oder analysierbar ist. Dieses Verfahren benötigt keine spezielle hardwaremäßige Entschlüsselungseinheit und damit kann der Entschlüsselungsalgorithmus mit geringem Aufwand getauscht werden. Dadurch, daß die Entschlüsselung des externen ROM's nicht in Echtzeit vorgenommen werden muß, können auch sehr anspruchsvolle Verschlüsselungsverfahren in das System implementiert werden. Die Produktion solch eines Microcontrollermoduls ist ohne besondere Sicherheitsmaßnahmen möglich. Des weiteren erlaubt das Verfahren eine Nachladbarkeit von fehlenden Befehlen in den eigentlichen Microcontroller und es ist ausschließbar, daß der Produzent mehr Microcontroller herstellen oder nachmachen kann, als ihm in Auftrag gegeben wurden.

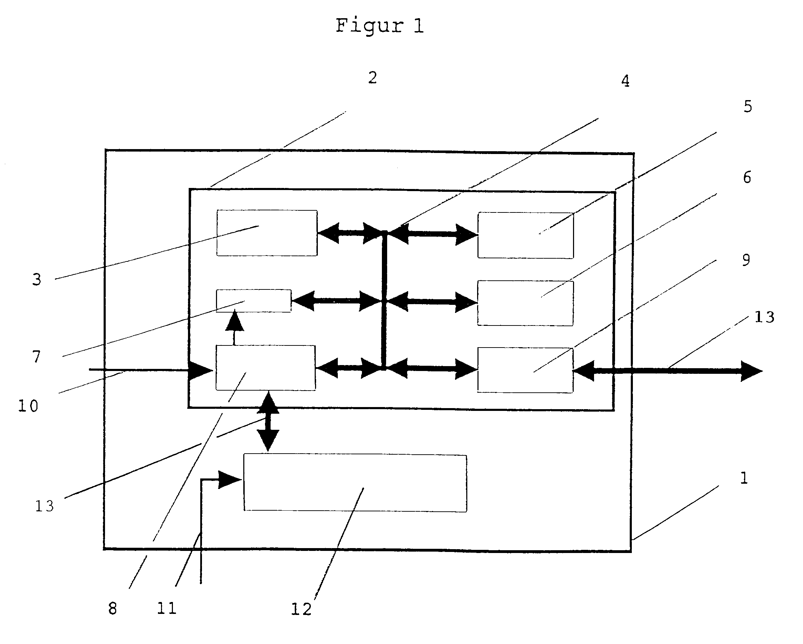

Die Erfindung wird nachstehend an Figur 1 - Figur 3 erläutert.

Die Erfindung soll anhand eines Anwendungsbeispiels für einen Verschlüsselungs-Microcontroller erläutert werden. Prinzipiell kann dieses Verfahren jedoch für jede beliebige andere Anwendung , z.B. bei Kreditkarten oder Telefonkarten angewandt werden.

Das in Figur 1 dargestellte Microcontrollermodul 1, besteht aus einem Microcontroller 2, in dem eine interne CPU 3 über einen internen Bus 4 mit einem internen ROM 5, einem internen RAM 6, einem Selektionsmodul 7, einem ROM Schnittstellenmodul 8 und einem Interface 9 verbunden ist und aus einem internen Programmiersignal 10, einem externen Programmiersignal 11 und einem externen Speicher (PROM) 12, der mit einem externem Bus 13 über das ROM Schnittstellenmodul 8 mit dem Microcontroller 2 verbunden ist.

Beim Start des Microcontrollermoduls 1, lädt der Microcontroller 2 den Inhalt des externen Speichers (PROM) 12 in den internen RAM 6. In diesem internen RAM 6, auf den nur durch die interne CPU 3 zugegriffen werden kann, wird der Inhalt des internen RAM 6 mit Hilfe des Selektionsmoduls 7, dessen Inhalt als Schlüssel dienen kann und mit Hilfe der eingelesenen Daten aus dem externen Speicher (PROM) 12, die auch als Schlüssel dienen können, unter verwendung eines Entschlüsselungsalgorithmus, der im internen ROM 5 steht, zu Programmcode und Daten entschlüsselt. Dabei kann das Programm im internen ROM 5 auch weitere Programmteile, wie Selbstesttroutinen oder Routinen zum blockweisen Einlesen des externen Speichers (PROM) 12, beinhalten. Nachdem das Programm oder die gerade benötigten Programmteile aus dem externem Speicher (PROM) 12 von der spezifisch verschlüsselten Form, in eine einheitliche abarbeitbare Form gebracht wurden, führt die interne CPU 3 die Befehle, die im internen RAM 6 stehen, aus. Das Interface 9 kann beliebige Kommunikationsteile eines standardmässigen Microcontrollers beinhalten, beispielsweise PlO, SlO oder sogar externe busähnliche Architekturen aufweisen. Über dieses Interface 9 kann der Microcontroller 2 mit anderen Einheiten, die zur Erledigung der gestellten Aufgabe erforderlich sind, kommunizieren. Das Selektionsmodul 7 dient lediglich zur Ablage eines microcontroller spezifischen internen Schlüssels, mit dessen Hilfe der externe Speicher (PROM) 12 entschlüsselt werden kann. Dadurch, daß jedes Selektionsmodul 7 einen anderen zufälligen Schlüssel beinhalten kann, können die externen Speicher (PROM) 12 auch nicht ausgetauscht werden, trotz daß der unverschlüsselte Originalinhalt des externen Speichers (PROM) 12 gleich sein kann. Damit kann kein Microcontrollermodul 1 unberechtigt durch einen unbefugten Hersteller kopiert werden, indem er einen ihm bekannten externen Speicher (PROM) 12 nimmt und den Mikrocontroller 2 kauft, um damit gleiche Microcontrollermodule 1 herzustellen. Er kann nicht wissen, welchen Wert das Selektionsmodul 7 hat. Das Selektionsmodul 7, kann als eine lange PROM-Zelle ausgeführt werden, deren Wert von der internen CPU 3 einmal programmiert werden kann, und danach nur gelesen werden kann, oder es kann auch ein unscharfer Rauschgenerator sein, der beim Anschalten immer den gleichen Wert liefert, aber wegen der geringen Toleranzgrenze pro Schaltkreis statistisch immer einen anderen Wert hat. Dabei kann es sich auch um einen Bereich handeln, der bestrahlt wurde und so durch Strukturveränderungen verschiedene Speicherzustände entstanden sind, oder es handelt sich um einen Bereich, in dem verschiednene Bondinseln vorhanden sind, die beim Bonden des Sachaltkreises verschieden gebondet wurden. Das Feld der Erzeugung von internen Nummern ist hier sehr weit, so daß nur einige Beispiele aufgezeigt werden konnten.

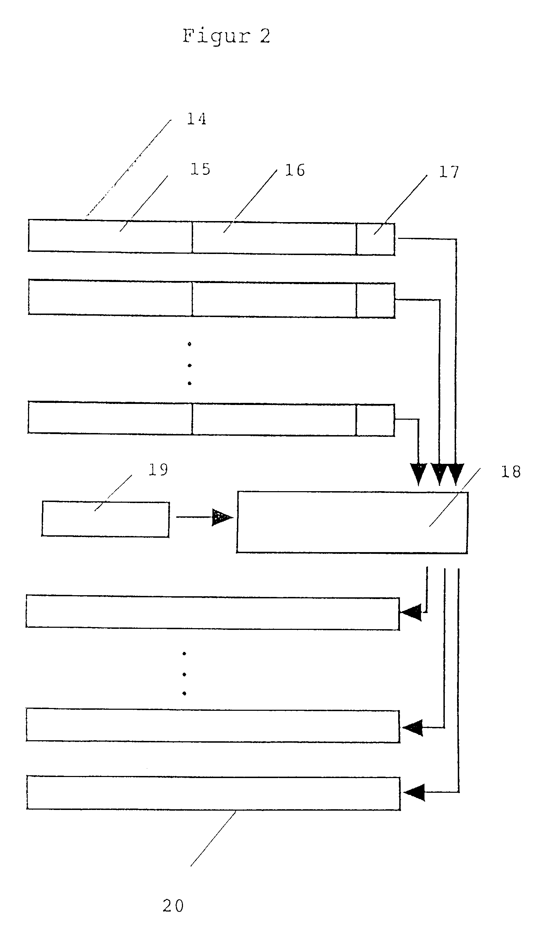

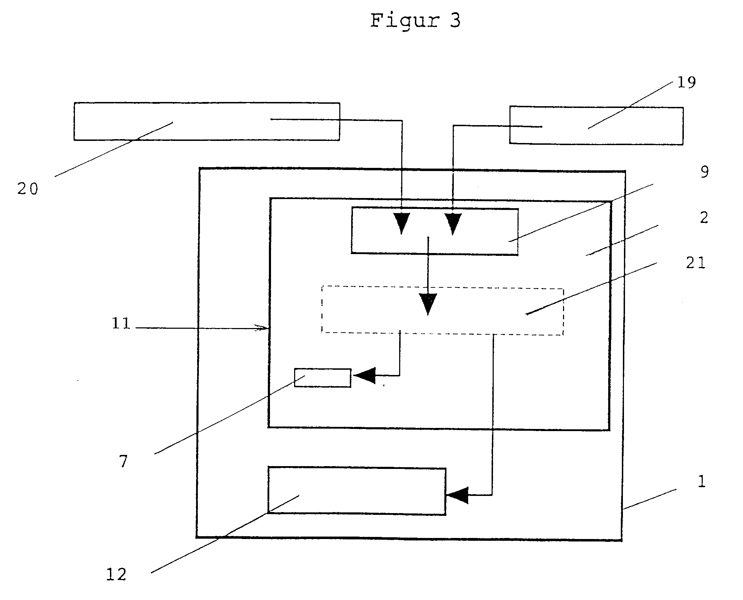

Das interne und externe Programmiersignal 10, 11 dient zur einmaligen Programmierung des externen Speichers (PROM) 12, mit Hilfe des ROM Schnittstellenmoduls 8 über den externen BUS 13, durch den Microcontroller 2. Dieser Vorgang wird nachfolgend durch Figur 2 und Figur 3 erläutert.

Der in Figur 2 dargestellte Ablaufplan, bestehend aus einer primären ROM Inhaltsdatei 14, zusammengesetzt aus einem externen ROM Programmcode 15, aus einem externen Variabelteil 16 und einem externen Seriennummernteil 17, sowie aus einem dem Know-how-Träger bekannten, Verschlüsselungsalgorithmus 18, einem anwenderspezifisch bekannten Produktionsschlüssel 19, und einer erzeugten Produktionsdatei 20.

Die Funktion ist dadurch charakterisiert, daß der Know-how-Träger den Inhalt der primären ROM Inhaltsdatei 14 erstellt. Diese Datei soll dann in spezieller Form in den externen Speicher (PROM) 12 übertragen werden. Der Inhalt der Datei kann beliebig gestaltet werden. In diesem Ausführungsbeispiel, welches keinen allgemeinen Charakter haben soll, sondern nur diesem speziellen Anwendungsfall gerecht wird, besteht die primäre ROM Inhaltsdatei 14 aus dem externen ROM Programmcode 15, der es auch erlaubt, ganze Programmteile des Microcontrollers 2 nach der Produktion dieses Microcontrollers zu ergänzen oder zu modifizieren und aus dem externen Variabelteil 16, dieser dient zur teilweisen Serialisierung der Microcontroller 2, so daß am Microcontroller 2 die Nummer des Systems abgefragt werden kann, und so sicher gestellt werden kann, das kein Microcontroller 2 zweimal hergestellt wurde, also die Einzigartigkeit jedes Microcontrollermoduls 1 gewährleistet werden kann, ohne daß der Produzent selbst Microcontroller herstellen kann. In den externen Variablenteil 16 können z.B. spezifische personengebundene Daten oder spezifische Schlüsselerzeugungsalgorithmen für den Verschlüsselungs-Microcontroller abgelegt werden. Dieser Bereich kann auch zur Ablage einer wachsenden Seriennummer benutzt werden, die durch einen Microcontrollerbefehl extern abfragbar ist, darüber können auch Vertriebs oder Produktionskontrollsysteme eingeführt werden. Eine Zuordnung der Microcontrollermodule 1 zu Personen wird durch diese Selektion möglich.

Nachdem der Know-how-Träger den Inhalt der primären ROM Inhaltsdatei 14 festgelegt hat, verschlüsselt er mit dem ihm bekannten Verschlüsselungsalgorithmus 18 die primäre ROM Inhaltsdatei 14 mittels des ihm bekannten anwenderspezifischen Produktionsschlüssels 19. So entsteht die Produktionsdatei 20, als anwenderspezifisch verschlüsselte Datei. Dem Know-how-Träger kann der Know-how-Träger bekannten Verschlüsselungsalgorithmus 18 in Form eines Programmes, beispielsweise auf einem PC, zur Verfügung gestellt werden. Auch wenn der gleiche Umschlüsselungsalgorithmus 21 im Microcontroller 2 vorhanden ist, können dennoch mehrere Anwender (Know-how-Träger) für den selben Microcontroller 2 ihre anwenderspezifische primäre ROM Inhaltsdatei 14 erstellen, ohne daß es zu einem Know-how-Verlust kommen kann, da der anwenderspezifisch bekannter Produktionsschlüssel 19 für jeden Anwender anders gewählt werden kann.

Die so erhaltene Produktionsdatei 20 wird nun bei der Herstellung der Microcontrollerbaugruppe, nach dem normalen Bestückungsprozeß, nach dem Anlegen der Speicherprogramierspannung über das Interface 9 an den Microcontroller 2 übertragen.

Der in Figur 3 dargestellte interne Ablaufplan, besteht aus dem Microcontrollermodul 1, dem Microcontroller 2, dem Selektionsmodul 7, dem Interface 9, dem externen Programmiersignal 11, dem externen Speicher 12, dem anwenderspezifisch bekannten Produtionsschlüssel 19, der erzeugten Produktionsdatei 20 und dem Umschlüsselungsalgorithmus 21.

Wenn der Produktionsprozeß der reinen physischen Produktion (Bestückung, Lötung usw.) beendet ist, wird die Microcontrollerbaugruppe über das Interface 9 kontaktiert und das externe Programmiersignal 11 wird an den externen Speicher (PROM) 12 angelegt. Wenn es notwendig ist, wird auch das interne Programmiersignal 10 angelegt. Nach diesem Kontaktieren wird nun der anwenderspezifische bekannte Produktionsschlüssel 19 dem Microcontroller 2 über das Interface 9 übertragen. Nach dieser Übertragung wird die Produktionsdatei 20 an den Microcontroller 2 übertragen. In dem Microcontroller 2 wird nun mit Hilfe des anwenderspezifisch bekannten Produktionsschlüssels 19 und der Produktionsdatei 20 unter Zuhilfenahme des Umschlüsselungsalgorithmuses 21 die primäre ROM Inhaltsdatei 14 entschlüsselt. Nach dieser Entschlüsselung, kann je nach Anwendungsfall der Inhalt des Selektionsmoduls 7 mit einem Wert aus der entschlüsselten Produktionsdatei 20 aufgefüllt werden, welcher später als interner Schlüssel dient. Es kann aber auch nur ein Wert aus der entschlüsselten Produktionsdatei 20 zum Umschlüsseln durch den Umschlüsselalgorithmus 21 benutzt werden. Der Umschlüs-selalgorithmus verschlüsselt die entschlüsselt im internen RAM 6 vorliegende Produktionsdatei 20 mit dem ausgewählten internen Schlüssel aus der Produktionsdatei 20 oder aus dem Selektionsmodul 7 oder aus der Kombination von beiden. Diese so erneut verschlüsselten Daten werden nun mit Hilfe des ROM Schnittstellenmoduls 8 in den externen Speicher (PROM) 12 eingebrannt. Damit ist ein spezifisch verschlüsselter externer Speicher (PROM) 12 erzeugt worden, dessen Verschlüsselung nicht einmal dem Know-how-Träger oder seinen Mitarbeitern bekannt sein muß. Es ist auch nicht unbedingt notwendig, daß der Schlüssel (bsw. der Inhalt des Selektionsmoduls 7) bekannt sein muß. Damit ist eine sehr hohe Sicherheit erreicht worden und der Hersteller der Microcontrollermoduls 1 kann keine eignen Microcontroller 2 illegal herstellen.

### Verwendete Bezugszeichen

- 1: Microcontrollermodul
- 2: Microcontroller
- 3: interne CPU
- 4: interner Bus
- 5: interner ROM
- 6: interner RAM
- 7: Selektionsmodul
- 8: ROM Schnittstellenmodul
- 9: Interface
- 10: internes Programmiersignal
- 11: externes Programmiersignal
- 12: externer Speicher (PROM)
- 13: externer Bus
- 14: primäre ROM Inhaltsdatei
- 15: externer ROM Programmcode
- 16: externer Variabelteil
- 17: externer Seriennummerteil
- 18: Know-how-Träger bekannter Verschlüsselungsalgorithmus
- 19: anwenderspezifisch bekannter Produktionsschlüssel
- 20: Produktionsdatei
- 21: Umschlüsselungsalgorithmus

## Patentansprüche

1. Microcontrollersicherungsverfahren, nach dem ein Auslesen des externen Microcontrollerprogramms und das Duplizieren der Microcontrollerbaugruppen ausgeschlossen ist, dadurch gekennzeichnet,
daß ein Microcontrollermodul (1), welcher aus einem externen Speicher (PROM) (12) und einem Microcontroller (2), bestehend aus einer internen CPU (3), einem internen Bus (4), einem internen ROM (5), einem internen RAM (6), einem Selektionsmodul (7) zur Ablage eines microcontrollerspezifischen internen Schlüssels,
einem ROM Schnittstellenmodul (8) und einem Interface (9), besteht, die über einen externen Bus (13) verbunden sind, mittels eines externen Programmiersignals (11) und optional mittels eines internen Programmiersignals (10) kontaktiert wird und der externe Speicher (PROM) (12) über den externen Bus (13) durch den Microcontroller (2) programmiert wird,
daß serialisierte Microcontroller (2) hergestellt werden, die von Dritten nicht kopierbar sind und die Vergabe von weiteren Seriennummern, auch insbesondere vom Hersteller eines Microcontrollermoduls (1), verhindert wird,
daß sehr anspruchsvolle Verschlüsselungsverfahren in das System implementiert werden, wobei beliebige Programme in variabler Größe aus dem externen Speicher PROM (12) nachgeladen werden können,
daß mit geringem Aufwand Entschlüsselungsalgorithmen ausgetauscht werden können, indem für die Produktion des Microcontrollermoduls (1) nacheinander eine Produktionsdatei (20) von einem Know-how-Träger erstellt wird,
daß die Produktionsdatei (20) durch Verschlüsselung einer primären ROM Inhaltsdatei (14) entsteht, welche aus einem externen ROM Programmcode (15), einem externen Variabelteil (16) und einem externen Seriennummernteil (17) besteht,
daß anschließend an die Produktion die Produktionsdatei (20) an einen Microcontroller (2) übertragen wird, wobei gleichzeitig an den Microcontroller (2) über das Interface (9) ein anwenderspezifisch bekannter Produktionsschlüssel (19) gesendet wird und im Microcontroller (2) mit Hilfe eines Umschlüsselungsalgorithmus (21) unter Benutzung des anwenderspezifisch bekannten Produktionsschlüssels (19) die Produktionsdatei (20) zur primären ROM Inhaltsdatei (14) entschlüsselt wird,
daß im Microcontroller (2) aus Teilen der primären ROM Inhaltsdabei (14) oder aus dem Inhalt des Selektionsmoduls (7) oder aus den Kombinationen der Inhalte des Selektionsmoduls (7) und der primären ROM Inhaltsdatei (14) ein verschlüsselter Datenstrom gebildet wird, der über das ROM Schnittstellenmodul (8), je nach Ausführung des externen Speichers (PROM) (12) einmalig oder wahlweise mehrfach, mit Hilfe des externen Programmiersignals (11) und des internen Programmiersignals (10) zum externen Speicher (PROM) (12) übertragen wird, wodurch gewährleistet wird, daß der externe Speicher (PROM) (12) nach jedem Prozeß für jedes Microcontrollermodul (1) einzigartig ausgeführt ist, wodurch ein Duplizieren des Microcontrollermoduls (1) ausgeschlossen wird und externe Programme weder für die Produzenten der Baugruppe noch für Dritte auslesbar oder analysierbar werden.

2. Microcontrollersicherungsverfahren nach Anspruch 1, dadurch gekennzeichnet, daß das Selektionsmodul (7) als:
a) EPROM-Zelle ausgeführt werden kann; oder
b) als ein unscharfer Rauschgenerator ausgeführt sein kann, der beim Anschalten immer den gleichen Wert liefert und bei anderen Schaltkreisen durch die engen Toleranzbedingungen Streuwerte liefert, wobei es sich um einen Bereich handelt, der bestrahlt wurde und indem somit durch Strukturveränderungen verschiedene Speicherzustände entstanden sind; oder
c) als ein Bereich, in dem verschiedene Bondinseln vorhanden sind, die beim Bonden des Schaltkreises verschieden gebondet werden, ausgeführt sein kann.

3. Microcontrollersicherungsverfahren nach Anspruch 1 und Anspruch 2, dadurch gekennzeichnet, daß der Umschlüsselungsalgorithmus (21) aus unterschiedlichen Teilalgorithmen bestehen kann.

4. Microcontrollersicherungsverfahren nach Anspruch 1 bis Anspruch 3, dadurch gekennzeichnet, daß der Inhalt des Selektionsmoduls (7) weder dem Hersteller noch dem Know-how-Träger bekannt ist.

## Claims

1. Microcontroller safeguarding method, according to which reading of the external microcontroller program and duplication of the microcontroller assembly is prevented,
characterised by the fact that
a microcontroller module (1), consisting of an external memory (PROM) (12) and a microcontroller (2) which consists of an internal CPU (3), an internal bus (4), an internal ROM (5), and internal RAM (6), a selection module (7) **for storing a microcontroller-specific internal key**, an ROM interface module (8) and an interface (9), which are connected via an external bus (13) is contacted by means of an external programming signal (11) and optionally by means of an internal programming signal (10) and the external memory (PROM) (12) is programmed via the external bus (13) by the microcontroller (2),
serialised microcontrollers (2) are produced which cannot be copied by third parties and the issue of further serial numbers, particularly by the manufacturer of a microcontroller module (1), is prevented,
highly sophisticated encryption methods are implemented in the system, whereby any programs of varying sizes can be loaded from the external memory PROM (12) at a later stage,
decryption algorithms can be exchanged with little effort, a production file (20) being generated from a know-how medium for the production of the microcontroller module (1),
the production file (20) is generated via the encryption of a primary ROM contents file (14) which consists of an external ROM program code (15), an external variable part (16) and an external serial number part (17),
following production, the production file (20) is transferred to a microcontroller (2), a user-specific, known production key (19) being sent to the microcontroller (2) simultaneously via the interface (9) and the production file (20) then being decrypted to the primary ROM contents file (14) with the help of the recryption algorithm (21), using the user-specific, known production key (19),
in the microcontroller (2) an encrypted data stream, consisting of parts of the primary ROM contents file (14) or of the contents of the selection module (7) or of combinations of the selection module (7) and the primary ROM contents file (14), is transferred via the ROM interface module (8), depending on the configuration of the external memory (PROM) (12) once or if required several times using the external programming signal (11) and the internal programming signal (10) to the external memory (PROM) (12), a process which guarantees that after every process for every microcontroller module (1) the external memory (PROM) (12) is uniquely configured, preventing duplication of the microcontroller module (1) and ensuring that external programs cannot be read or analysed by the producers of the assembly or by other third parties.

2. Microcontroller safeguarding method according to Claim 1, characterised by the fact that the selection module (7) can be configured as:
a) an EPROM cell; or
b) an unfocused noise generator which always provides the same value on start up and provides scattered values with other circuits because of the narrow tolerance conditions, whereby this is an area which has been radiated and where structural changes have therefore given rise to a different memory status; or
c) an area in which various bond islands are present which can be bonded differently when bonding the circuit.

3. Microcontroller safeguarding method according to Claim 1 and Claim 2, characterised by the fact that the recryption algorithm (21) can consist of various part algorithms.

4. Microcontroller safeguarding method according to Claim 1 to Claim 3, characterised by the fact that the contents of the selection module (7) are known neither to the manufacturer nor the know-how medium.

## Revendications

1. Procédé destiné à la sûreté de microcontrôleurs d'après lequel une lecture du programme externe du microcontrôleur et la reproduction en double exemplaire des éléments du microcontrôleur sont exclues, **caractérisé par le fait que**
un module de microcontrôleur (1) qui se compose d'une mémoire externe (PROM, mémoire morte programmable) (12) et d'un microcontrôleur (2), se composant d'une unité interne centrale de traitement (3), d'un bus interne (4), d'une mémoire interne ROM (mémoire morte) (5), d'une mémoire interne RAM (mémoire à accès sélectif) (6), d'un module de sélection (7) destiné à ranger une clé interne spécifique au microcontrôleur, d'un module de jonction ROM (8) et d'une interface (9) reliés par l'intermédiaire d'un bus externe (13), et qui est mis en contact au moyen d'un signal externe de programmation (11) et facultativement au moyen d'un signal interne de programmation (10) et **par le fait que** la mémoire externe (PROM) (12) est programmée par le microcontrôleur (2) par l'intermédiaire du bus externe (13),
**par le fait que** des microcontrôleurs (2) mis en série, dont des tiers ne peuvent en faire aucune copie, sont produits et que l'adjudication d'autres numéros de série, également notamment par le fabricant d'un module de microcontrôleur (1), est empêchée.
**par le fait que** des procédés de codage très exigeants sont implantés dans le système, des programmes quelconques de dimension variable pouvant être chargés ultérieurement à partir de la mémoire externe ROM (12),
**par le fait que** des algorithmes de décodage peuvent être échangés à peu de frais en établissant ultérieurement par un support de tour de main un fichier de production (20) pour la production du module de microcontrôleur (1),
**par le fait que** le fichier de production (20) naît par cqdage d'un fichier primaire de contenu ROM (14) qui se compose d'un code de programme externe ROM (15), d'un élément externe variable (16) et d'un élément externe de numéro de série (17),
**par le fait qu'**en fin de production, le fichier de production (20) est transmis à un microcontrôleur (2), un code de production (19) connu spécifiquement de l'utilisateur étant envoyé en même temps au microcontrôleur (2) par l'intermédiaire de l'interface (9) et le fichier de production (20) étant décodé en fichier primaire de contenu ROM (14) dans le microcontrôleur (2) à l'aide d'un algorithme de changement de code (21) en utilisant le code de production (19) connu spécifiquement de l'utilisateur,
**par le fait qu'**un flux de données codé est formé dans le microcontrôleur (2) à partir d'éléments du fichier primaire de contenu ROM (14) ou à partir du contenu du module de sélection (7) ou à partir des combinaisons des contenus du module de sélection (7) et du fichier de contenu ROM (14), flux de données qui est transmis à la mémoire externe (PROM) (12) par l'intermédiaire du module de jonction ROM (8) à l'aide du signal externe de programmation (11) et du signal interne de programmation (10) une seule fois ou au choix plusieurs fois selon l'exécution de la mémoire externe (PROM) (12), ce par quoi il est garanti que la mémoire externe (PROM) (12) est exécutée singulièrement d'après chaque processus pour chaque module de microcontrôleur (1), ce par quoi une reproduction en double exemplaire du module de microcontrôleur (1) est exclue et des programmes externes ne sont susceptibles d'être lus ou analysés ni pour le producteur de l'élément de produit ni pour des tiers.

2. Procédé destiné à la sûreté de microcontrôleurs selon la revendication 1, **caractérisé par le fait que** le module de sélection (7) :
a) peut être exécuté en cellule EPROM (mémoire morte, programmable et effaçable) ; ou
b) qu'il peut être exécuté en générateur de bruit incertain qui livre toujours la même valeur lors de son enclenchement et qui livre, par les petites conditions de tolérance, des valeurs de dispersion pour d'autres circuits, à l'occasion de quoi il s'agit d'un domaine qui a été exposé aux rayons et, de ce fait, il est ainsi apparu différents états de la mémoire par des changements structurels ; ou
c) qu'il peut être exécuté en domaine dans lequel il y a différentes pastilles qui peuvent être soudées différemment lors du soudage du circuit.

3. Procédé destiné à la sûreté de microcontrôleurs selon la revendication 1 et la revendication 2, **caractérisé par le fait que** l'algorithme de changement de code (21) peut se composer de différents algorithmes partiels.

4. Procédé destiné à la sûreté de microcontrôleurs selon la revendication 1 à 3, **caractérisé par le fait que** le contenu du module de sélection (7) n'est connu ni du fabricant ni du support de tour de main.
